# EUROPEAN PATENT APPLICATION

(11) **EP 2 128 206 A1**
(43) Date of publication of application: **02.12.2009**
(21) Application number: 09460020.2
(22) Date of filing: 20.05.2009
(51) Int. Cl.: C09D 7/12, C09D 167/00, C09D 191/00

(54) **Composite oil paint**

(30) Priority: 27.05.2008 RU 2008120816
(71) Applicant: Atifarb Sp. z o.o., 42-200 Czestochowa (PL)
(72) Inventor: Wladimirowicz, Pokowyrow Igor, Moskwa 143989 (RU)
(74) Representative: Urbanek, Jan

(57) **Abstract**

The subject of the invention is the composite oil paint and is objective is to increase the durability of a long lasting coat and its quality: adhesion of the paint film to the surface; its strength, resistance to the influence of water, acids, bases, gasoline, oil etc. as well as dielectric properties. The advantage of paint is its quick drying and environment friendliness. The technical result illustrated herein has been achieved as a result of the components contained in said composite oil paint in the following proportions (w/w, %):
• PI 1-7 coat - forming film - 50÷90;
• titanium oxide and / or chalk - 0,1÷32;
• pigment and / or pigment paste - 0,1÷20;
• cement and / or cement dust - 0,1÷30;
• chemical solutions and / or lacquer - 0,1÷14;
• solution of solvent with siccative or siccative 0,5÷5;
• functional additives - remaining fractions.

## Description

A subject matter of the present invention is the composite oil paint, particularly the method of chemical technology used in production of paints and lacquers, particularly for the composition of paint applied in shipyard industry, in course of construction works carried out in the mines on the depths of 800m or more; for execution of overhaul works in metallurgical facilities; for painting of concrete and plaster facades in buildings and structures, for painting of steel structures, for painting of metal overhead transmission lines supports, for painting of wooden fences and structures; for painting of roofs with shale roofing.

Actually known gliphthalic primers GF-021 (ΓΦ-021) constitute the dispersion of pigments and fillers in gliphthalic lacquer or in alkyd lacquer with corresponding additive of siccative, solvent as well as stabilizing agents and used for priming of metal and wooden surfaces before their coating with various enamels (GOST 23129-82*); GF-0119 (ΓΦ-0119) prepared on the basis of alkyd lacquer, anticorrosion pigments and fillers with the addition of organic solvents, siccative and stabilizing agents (GOST 23343); penthaerythrite - phthalic enamels PF-218 (ΠΦ-218) constituting the dispersion of pigments, fillers and agents reducing their flammability in penthaerythrite - phthalic lacquer with the addition of organic solvents (GOST 21227-93); PF-115 (ΠΦ-115) constituting the dispersion of titanium dioxide in the form of rutile as well as other pigments and fillers in penthaerythrite - phthalic lacquer with the addition of siccative and solvents (GOST 6465-76); PF-266 (ΠΦ-266) constituting the dispersion of pigments in a mixture of alkyd lacquers with the addition of siccative and solvent (Technical conditions TY-6-10-222); PF-1145 (ΠΦ-1145) constituting the dispersion of pigments, fillers in penthaerythrite - phthalic lacquer with the addition of organic solvents (Technical conditions TY-6-10-1418); water dispersion paints WD-KCZ-183 (B 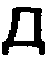 - 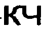 -183) (based upon water dispersions of synthetic polymers) and WD-AK-111 (B 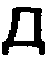 -AK-111) (based upon copolymer acrylate dispersion) (GOST 28196-89).

The disadvantages of the paints specified above are long time of drying and insufficient coat hardness.

The purpose of the invention to be achieved by the present embodiment is to create the composition oil paint excluding aforesaid disadvantages.

A technically desired effect which achieved in case of implementation of the embodiment in accordance with the invention, consists in the improvement of the strength and quality of long - term durable coat as a result of:
1. increase of paint adherence to the surface (penetration of a paint on molecular level into the substrate): iron (light metals) alloys as well as to the surface of concrete, wood, shales and plasters;
2. no coat cracks in case of bending and sudden temperature changes, because the paint film flexibility is maintained during several years;
3. applied paint coat is resistant to high temperatures (up to 350°C) without any damages;
4. paint can be applied onto hot surfaces (up to 150°C);
5. paint film is characterized by high resistance to the impact of water, acids, bases, gasoline, oil etc.,
6. paint can be applied onto the surfaces without previous rust removal; corroded as well as also onto oiled and wet surfaces;
7. it is recommended to use the paint as a dielectric material i.e. characterized by direct current resistance (GΩ) and low capacity (nF);
8. any tick and dried film layer is not created on the paint surface in course of its storage;
9. the painting is possible at ambient air temperatures below zero
10. the drying is fast: the next layer of paint can be applied after 4-8 hours; 3 hours are required for drying to 3^{rd} degree in accordance with "stripping test" (at ambient air temperature above 20°C, about 1 hour is required for drying in accordance with "stripping test");
11. the paint is environment friendly, because it is prepared on the basis of coat - forming PI 1-7 film and natural mineral fillers;
12. the production of any versions of paint is possible: from velvety matt up to shining paint.

Said technical desired effect is achieved in the composite oil paint consisting of the components in the following weight proportions (% w/w):
- coat - forming PI 1-7 film - 50÷90;
- titanium oxide and / or chalk - 0,1÷32;
- pigment and / or pigment paste - 0,1÷20;
- cement and / or cement dust - 0,1÷30;
- chemical solutions and / or lacquer - 0,1÷14;
- solution of solvent with siccative or siccative 0,5÷5;
- functional additives - remaining fractions.
- PI 1-7 film coat - forming composition consists of the components in the following weight proportions (% w/w):
- lacquer or mixture of lacquers 1÷55;
- oil varnish and / or plant oils and / or liquid waste from oils production and /or mazout and / or crude oil sludge and / or bitumen 45÷1;
- adhesive solution and or dispersed polymers in alkaline matrix and / or water - glass 1÷10;
- sol vent or mixture of solvents 3÷20;
- functional additives - remaining fractions.

The penthaerythrite - phthalic lacquer and /or gliphthalic lacquer and / or nitrocellulose lacquer and / or melamine lacquer and / or perchlorovinyl lacquer and/or ethyl cellulose lacquer and / or lacquer with post - coal bitumen matrix is used as the lacquer or mixture of lacquers.

The product or waste produced in crude oil refinery is used as the crude oil sludge.

The polyacrylic polymers or acrylic bustamite or acrylic polyvinyl or complex consisting of dry alkaline components and mineral salts are used as dispersed polymers in alkaline matrix.

Water and/ or nefras and /or solvent and / or gasoline and / or solvents 647, 646, 650, 651 and / or siccative are used as the solvents.

The polyacrylic polymers or gliphthalic polymers or sulfanols or "Rosima GT" or diglicol butyl or Winopas are used as the functional additives.

The microtalc and /or micromica or sand and / or lime or lime milk and / or volatile ash and / or micro - calcium and / or linkarp and / or sulfanol and / or ferrous oxide or ferric oxide are used as the functional additives.

The first time PI1-7 composite oil paint appeared in the market in the period 2000-2001 in Staryj Oskol town situated in Bielgorodski District which is confirmed by the following documents: TY 2317-001-22239196-00, catalogue production card registered under number 041/002105 of 22.03.2000; with certificate of hygiene and records of tests (No 270 of 18.02.2000r, 20.10.2000; No 344 of 16.10.2000 etc.). Actually PI1-7 composite oil paint is manufactured in Riaza 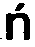 .

PI1-7 composite oil paint is environment friendly.

The manufacturing process is subject to rigorous inspection in its all phases, commencing from the incoming raw materials and ending with the examination of paint in accordance with TY and GOST technical conditions and finally the issuance of the final product data sheet.

The paints included in PI1-7 series are the composite oil paints. The common features of all paints consists in applied materials: coat - forming PI 1-7 film; "UniKom Si - 400" process plant, mineral fillers and functional additives.

The composition of paint: dispersion of PI 1-7 film with pigment, filler, substances reducing flammability and functional additives, particularly the following (weight percentage; %):
coat - forming PI 1-7 film - 50÷90 + titanium oxide and / or chalk - 0,1÷32 + pigment and / or pigment paste - 0,1÷20 + cement and / or cement dust - 0,1÷30 + functional additives: microtalc and /or micromica; sand (dust) and / or lime or lime milk and / or volatile ash (slag) and / or micro - calcium and / or linkarp and / or sulfanol and / or ferrous oxide or ferric oxide - waste - -0,1÷45 and / or chemical solutions and / or lacquer - 0,1÷14 and solution of solvent with siccative or siccative 0,5÷5.

The addition of liquid additives classified as the functional additives i.e. lacquer, chemical solutions, solvents is allowed in course of production process..

PI 1-7 film coat - forming composition consists of the components in the following weight proportions (% w/w):
○ lacquer or mixture of lacquers 1÷55;
○ oil varnish and / or plant oils and / or liquid waste from oils production and / or mazout and / or crude oil sludge and / or bitumen 45÷1;
○ adhesive solution and or dispersed polymers in alkaline matrix and / or water - glass 1÷10;
○ solvent or mixture of solvents 3÷20;
○ functional additives - remaining fractions.

The penthaerythrite - phthalic lacquer and /or gliphthalic lacquer and / or nitrocellulose lacquer and / or melamine lacquer and / or perchlorovinyl lacquer and/or ethyl cellulose lacquer and / or lacquer with post - coal bitumen matrix is used as the lacquer or mixture of lacquers.
The product or waste produced in crude oil refinery is used as the crude oil sludge.

The polyacrylic polymers or acrylic bustamite or acrylic polyvinyl or complex consisting of dry alkaline components and mineral salts are used as dispersed polymers in alkaline matrix.

Water and/ or nefras and /or solvent and / or gasoline and / or solvents 647, 646, 650, 651 and / or siccative are used as the solvents.

The polyacrylic polymers or gliphthalic polymers or sulfanols or "Rosima GT" or diglicol butyl or Winopas are used as the functional additives.

The special applications of PI 1-7 composition oil paint have been specified in Table 1.

**Table 1**

| **What can be painted** | **Advantages of PI 1-7 paint** |
|---|---|
| Engineering networks: heating pipelines; steam lines and crude oil transfer pipelines etc. | Surfaces with temperature up to 150°C can be painted (without their cooling) |
| Metal structures affected by aggressive environments | Resistance to the influence of AIDS, water, gasoline and oil. |
| External surfaces instruments, facilities and mechanisms (ships) | Instruments can be heated in course of operation up to temperature no higher than 150 (250) degrees and in particular cases - up to 350°C. |
| Coating of profiled sheets | Paint can be applied before and also after profiling: any thorough oil removal is unnecessary. |
| Primer for metal as the primer coat for various enamels. | Film is resistant to nitro paints (lacquers and the paint grades: **HC/***HLll*, **EP**/ 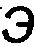 Π/, **AK/***AKl,* **XB**/*XB*/, **ML/***MΠ*/*,* |
| | **KO/***KOI*, **KCZ**/*K* 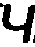 /, **BT/** 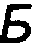 *T*/, **KF**/KΦ/ etc.) and can be used as the basis for multilayer coats (equivalent **GF-021** /ΓΦ*-021*/*)* |
| Paint for chips coats | Can be produced in the version containing Sand filler in order to obtain rough surface. Resistant to the influence of salts, AIDS, bases, crude oil derivatives (equivalent to enamel **PF-1145/**ΠΦ-1145/). |

Remarks: PI 1-7 composition oil paints can be applied onto the surface by spraying, immersing, by means of a roller and brush.
PI 1-7 composition oil paints are also used in case of outdoor works (see Table 2)

**Table 2**

| **What can be painted** | **Advantages of PI 1-7 paint** |
|---|---|
| Facades of buildings (plasters, concrete) | Coating prevents the destruction of protective surface layer and its durability period is 2 up to 3 times longer (in comparison to water - dispersion paints) |
| Roof and wavy shales | Improvement of quality and ecological features.. |
| Metal fencing | Paint can be applied without any previous priming, directly on rust |
| Wooden fencing | Any separate priming is unnecessary. The first paint layer is applied as prime coat and the second layer is the protective coat. |
| Bricks | On request, the paint can be supplied as a "coloured putty". After its applying, any painting with Rother paints is unnecessary. |

PI 1-7 composition oil paints are also used in case of indoor works (see Table 3)

**Table 3**

| **What can be painted** | **Advantages of PI 1-7 paint** |
|---|---|
| Wooden floors, doors, windows | Durability period of the coat is prolonged |
| Plaster and concrete walls, floors, flooring | Any separate priming is unnecessary. The first paint layer is applied as prime coat and the second layer is the protective coat |
| Wallpapers, scale boards, GPKs etc. | No paint spreading and stains of oil varnish on edges |
| | in comparison to ordinary oil paints. |
| Metal radiators and heating pipelines | Any rust removal is unnecessary. It is allowed to apply the paint directly on hot surfaces (up to 150°C). |
| Galvanized metal (pipes, sheets) | Paint is characterized by high adhesion also related to zinc coating; can be applied onto rusted galvanized coatings without fitting. |

Tables 1 - 3 contain only the most important applications of the paint - the scope of its application is much wider.
Table 4 contains the summary of comparative parameters of other analogous paints

**Table 4**

| **Parameters** | **Comparative parameters** | | | | |
|---|---|---|---|---|---|
| | **PI 1-7** | **GF-021** / ΓΦ*-021*/ | **PF-115** /ΠΦ*-115*/ | **PF-218** /ΠΦ*-218*/ | **PF-266** /ΠΦ-*266*/ |
| Colour of coating | In the scope of templates | | | | |
| Viscosity not exceeding, sec. | 120 | 20-150 | 25-150 | 20-150 | 70 |
| Covering Power not exceeding, g/m² | 139,8 | 140 | 240 | 240 | 110 |
| Non-volatile fractions content, % | 62-72 | 45 | 44 | 44 | 59-65 |
| Film hardness, j.um. | 0,14 | 0,25 | 0,25 | 0,25 | 0,35 |
| abrasion degree, µm., not higher than | 20 | 40 | 10-25 | 10-35 | 50 |
| Drying of film up to 3rd degree, not higher than, hours | 24 | 24 | 24 | 24 | 24 |
| Adhesion | 1 | 1 | 1 | 1-2 | |
| **(at t=200°C)** | 1 | - | - 0 | -0 | - |
| Film shine, j.um. | 0-63 | - | 60 | - | - |
| Resistance to the influence of: | | | | | |
| - water, more than, hours | 24 | - | 2 | - | - |
| - 3% NaCl, solution, more than, hours | 48 | - | - | - | - |
| - machine oil, more than, hours | 48 | - | - | - | - |
| Film deflection, degree | 1 | 1 | - | - | - |
| **(at t=200°C)** | 1 | - | - | - | - |

PI1-7 composite oil paint - coating - durability more than 4 kg/pm. - no coating abrasion took place;
- PI1-7 composite oil paint - testing on rusted metal plate - withstanding more than 3000 hours in sea water;

Remarks: Table 4 has been prepared on the basis of the following tests:
- research centre "KORTEST" ZAO "Korona-Lak";
- research centre "BielGTACM-serwis";
research centre in Poland - GDANSK UNIVERSITY OF TECHNOLOGY.

Before application of paint, the surface should prepared: i.e, the surface should be dry, preliminary cleaned in order to remove fats, contaminations and old exfoliating paint.

Usually any thorough clearing and degreasing is unnecessary, but any extremities are unacceptable.

Before use, the paint should be diluted by means of diluent in order to reach required viscosity i.e.: by means of gasoline diluents, solvent, turpentine, water etc. the paint is applied by means of roller, spraying gun or by immersing, in the form of an uniform single or dual layer.

Paint drying time depends on ambient air temperature and humidity as well as on paint application technology.

For instance in case of ambient air temperature of 24°C outdoors on a sunny day, the layer of paint applied by means of spraying gun will be dry after 10-20 minutes (up to degree 3).

At ambient air temperature of 18°C in a room with high temperature, the layer of paint applied by means of brush will be dry after 1- 2 hours (up to degree 3).

The coat will be completely dry after 24 hour after the application.

Furthermore the strength of paint is increased for several next days (1 - 4 weeks). As a result of such specific properties, the protective properties of the paint are maintained for a very long period (more than 5 - 15 years) (slow ageing).

The objective established in course of the paint development consisted in the achievement of a long lasting coating with maximum durability, therefore the paint is hardened from substrate toward the surface.

In case of increased drying temperature, the adhesion toward iron alloys and the strength of applied coat are increased. For instance in case of heating of a painted surface up to 50-60°C, such layer is dry after 20-30 minutes and its complete strength is achieved after several hours. During said period of several hours, an unique integration of the paint layer with metal is created as a result of reaction with metal, coat - forming film deposited thereon with rust.

Furthermore the paint differs from other paints, because it has been prepared on alkaline basis.

On the request, the properties of paint can be modified in a very wide scope.

PI1-7 composite oil paint - coating is applied (conformity) onto surfaces (or is coated by other paints) previously coated with NC - nitrocellulose, EP - epoxy and epoxy - ether, AK - polyacrylic, XB - perchlorovinyl, ML - melamine, KO - silica - organic, KCZ - rubber, BT - bitumen, KF - calophony, GF - gliphthalic, PF - penthaerythrite - phthalic coat etc.

The base kit of PI1-7 composite oil paint consists of PI 1-7 coat - forming complex (film) as well as of 3 - 9 chemical substances and dried materials, functional additives i.e. waste from facilities producing aluminous cement, product and waste from cement factories, titanium oxides and dye stuffs, raw materials and waste from chemical industry, waste from motor vehicle tyres neutralization facilties etc.

The addition of liquid additives classified as the functional additives i.e. lacquer, chemical solutions, solvents is allowed in course of production process.

However the chalk (calcium carbonate) with pH = 8 and more should not be introduced into the composition of the paint.

The examples (weigh percentage, %) illustrating the essence of the invention are presented below, Table 5 contains the general composition of PI1-7 composite oil paint - Example 1.

**Table 5**

| **Denomination of component** | **Composition, weight proportions %** | | |
|---|---|---|---|
| PI 1-7 coat - forming film | 50 | 67 | 90 |
| titanium oxide and / or chalk | 23 | 5,7 | 0,1 |
| pigment and / or pigment paste | 0,5 | 2,1 | 0,1 |
| cement and / or cement dust | 10 | 3,1 | 0,7 |
| chemical solutions and / or lacquer | 6 | 14 | 0,1 |
| solution of solvent with siccative or siccative | 0,5 | 5 | 2,5 |
| functional additives | 10 | 3,1 | 6,5 |
| Total | 100 | 100 | 100 |

### Example 2. Primer - paint

- PI 1-7 coat - forming film - 62÷65%;
- microtalc - 16÷12%;
- micromica - 0,1÷14,5%;
- cement - 8÷2%;
- pigment (colour) - 1÷0,5%;
- titanium oxide - 1÷5%;
- siccative - 3÷1%;

### Example 3. Facade (universal) paint:

- PI 1-7 coat - forming film - 52÷55%;
- titanium oxide - 31,5÷25%;
- cement - 13÷17%;
- time - 0,5÷1,5%;
- siccative - 3÷1,5%;

### Example 4. Shining or semi - shining special paint:

- PI 1-7 coat - forming film - 69,5÷77%;
- titanium oxide - 0,1÷3%;
- pigment - 15,3÷10%;
- micromica - 5÷3%;
- cement - 3÷2%;
- micro calclium - 0,1÷0,5%;
- lacquer - 5÷2%;
- sulfanol (solution) - 0,5÷0,1%;
- siccative - 1,5÷2,4%;

Remark: percentage of shine is adjusted with the amount of PI 1-7 coat - forming film.

### Example 5. Primer:

- PI 1-7 coat - forming film - 60÷65%;
- volatile ash - 5÷10%;
- lime (powdered) -3÷1%;
- cement - 10÷5%;
- micromica - 15÷10%;
- iron oxide - 5÷8%;
- siccative - 2÷1%;

### Remarks: iron oxide - waste from milling shop;

### Example 6. Priming paint (special paint for ships):

- PI 1-7 coat - forming film - 67÷70%;
- titanium oxide - 5÷2%;
- micromica - 5÷2%;
- microtalc - 11÷7%;
- cement - 8÷2%;
- soap solution with copper additive- 5÷14%;
- siccative - 1÷3%;

Remark: Priming paint should be used for painting of underwater parts of ship.

### Example 7. Facade paint:

- PI 1-7 coat - forming film - 50÷62%;
- activated dust (production waste from factories producing aluminous cement) - 45÷35%;
- alkaline water (lime milk) - 4÷1%;
- siccative - 1÷2%;

### Example 8. Priming paint (special paint for ships):

- PI 1-7 coat - forming film - 55÷69%;
- cement - 15÷5%;
- rubber cement - 20÷6%;
- rubber dust (waste from motor vehicle tyres processing) - 5÷14%;
- bone emulsion - 3÷5%;
- siccative - 2÷1%;

Remarks: the primer is applied from the inner board of the tanker and simultaneously performs the role of sealing material preventing any leakages of crude oil derivatives into the sea.

### Example 9. Priming paint:

- PI 1-7 coat - forming film - 50÷59%;
- iron oxide (waste from milling shops) - 40÷20%;
- silica dust (silica waste) - 4÷1%;
- epoxy lacquer - 5÷15%;
- solution of siccative and diluent - 1÷5%;

### Example 10. Shining or semi - shining paint:

- PI 1-7 coat - forming film - 62÷70%;
- cement - 10÷5%;
- iron oxide (waste from milling shops) - 8÷3%;
- mineral powder (dolomite sand) - 12÷7%;
- melamine lacquer - 6÷12%;
- siccative - 2÷3%;

### Example 11. Surface quality paint:

- PI 1-7 coat - forming film - 80÷90%;
- cement - 1÷0,1%;
- titanium oxide - 1÷0,1%;
- pigment (colour) - 15÷4,8%;
- siccative - 3÷5%;

Remarks: used in furniture industry, building sector, shipyard industry, aircraft industry etc.

### Example 12. Paint:

- PI 1-7 coat - forming film - 62÷65,2%;
- pigment - 5÷0,1%;
- titanium oxide - 1÷2,8%;
- cement- 2÷29,8%;
- cement dust (waste) - 29,5÷0%; - siccative - 0,5÷2,1 %;

Remarks: paint should be used for painting of metal surfaces and is resistant to the influence of aggressive factors (reference OAO "Oskolcement" of 18.02.2008).

## Claims

1. The composite oil paint **characterized by the fact** that said composite oil paint consists the components in the following proportions (w/w' %):
• PI 1-7 coat - forming film - 50÷90;
• titanium oxide and / or chalk - 0,1÷32;
• pigment and / or pigment paste - 0,1÷20;
• cement and / or cement dust - 0,1÷30;
• chemical solutions and / or lacquer - 0,1÷14;
• solution of solvent with siccative or siccative 0,5÷5;
• functional additives - remaining fractions.

2. The composite oil paint according to claim 1 **characterized by the fact** that PI 1-7 coat - forming film consists of the components in the following weight proportions (% w/w):
• lacquer or mixture of lacquers 1÷55;
• oil varnish and / or plant oils and / or liquid waste from oils production and / or mazout and / or crude oil sludge and / or bitumen 45÷1;
• adhesive solution and /or dispersed polymers in alkaline matrix and / or water - glass 1÷10;
• solvent or mixture of solvents 3÷20;
• functional additives - remaining fractions.

3. The paint according to claim 2 **characterized by the fact** that penthaerythrite - phthalic lacquer and /or gliphthalic lacquer and / or nitrocellulose lacquer and / or melamine lacquer and / or perchlorovinyl lacquer and/ or ethyl cellulose lacquer and / or lacquer with post - coal bitumen matrix is used as the lacquer or mixture of lacquers.

4. The paint according to claim 2 **characterized by the fact** that the product or waste produced in crude oil refinery is used as the crude oil sludge..

5. The paint according to claim 2 **characterized by the fact** that polyacrylic polymers or acrylic bustamite or acrylic polyvinyl or complex consisting of dry alkaline components and mineral salts are used as dispersed polymers in alkaline matrix.

6. The paint according to claim 2 **characterized by the fact** that water and/ or nefras and /or solvent and / or gasoline and / or solvents 647, 646, 650, 651 and / or siccative are used as the solvents..

7. The paint according to claim 2 **characterized by the fact** that the polyacrylic polymers or gliphthalic polymers or sulfanols or "Rosima GT" or diglicol butyl or Winopas are used as the functional additives.

8. The paint according to claim 1 **characterized by the fact** that the microtalc and /or micromica or sand and / or lime or lime milk and / or volatile ash and /or micro - calcium and / or linkarp and / or sulfanol and / or ferrous oxide or ferric oxide are used as the functional additives.
